**Europäisches Patentamt**

**European Patent Office**

**Office européen des brevets**

(19)

(11) Numéro de publication: **0 210 879**
**B1**

(12) **FASCICULE DE BREVET EUROPEEN**

(45) Date de publication du fascicule du brevet: **27.09.89**

(51) Int. Cl.⁴: **B 62 K 25/04**

(21) Numéro de dépôt: **86401225.7**

(22) Date de dépôt: **06.06.86**

(54) Dispositif de suspension pour un bras support de roue de véhicule et système de couplage avant-arrière pour une telle suspension.

(30) Priorité: **28.06.85 FR 8509886**

(43) Date de publication de la demande: **04.02.87 Bulletin 87/6**

(45) Mention de la délivrance du brevet: **27.09.89 Bulletin 89/39**

(84) Etats contractants désignés: **AT BE CH DE GB IT LI LU NL SE**

(56) Documents cités: **DE-A- 3 150 357 FR-A- 2 397 317 FR-A- 2 418 141**

(73) Titulaire: **ELF FRANCE, Société Anonyme dite:, Tour Elf 2 place de la Coupole La Défense 6, F-92400 Courbevoie (FR)**

(72) Inventeur: **Trema, Daniel, 31, rue du 15 fevrier, F-95870 Bezons (FR)**
Inventeur: **DE CORTANZE, André, 49, rue du Val d'Or, F-92210 St Cloud (FR)**

(74) Mandataire: **Hirsch, Marc-Roger, Cabinet Hirsch 34 rue de Bassano, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention s'applique à un dispositif de suspension d'un bras support rotatif d'une roue de véhicule, en particulier d'une roue de motocycle, ledit bras support étant susceptible de se débattre par rotation autour d'une axe de liaison solidaire du châssis ou de la caisse du véhicule pour coopérer avec un ressort de compression. Un tel dispositif est déjà connu du FR-A-2 418 141. L'invention concerne également un système de couplage avant-arrière pour une telle suspension.

La suspension des véhicules à l'aide de bras supports rotatifs de suspension de chacune des roues est bien connue, en particulier dans le domaine de la suspension des véhicules automobiles où le bras rotatif est avantageusement rendu solidaire en rotation de l'une des extrémités d'une barre de torsion dont l'autre extrémité est ancrée au châssis du véhicule. Ces dispositions compactes et pratiques ne sont malheureusement pas applicables aux motocycles où l'on ne dispose pas d'une largeur suffisante pour loger transversalement un ressort à barre de torsion.

Dans le domaine des motocycles, on utilise généralement comme ressort de suspension un ressort hélicoïdal incorporé autour d'une vérin d'amortissement hydraulique et dont les caractéristiques d'amortissement et/ou de souplesse sont réglables rapidement par l'intermédiaire de crans ou de vis. Le débattement du bras support rotatif au point d'accrochage des leviers de suspension est par ailleurs amplifié par des leviers au niveau de l'extrémité d'appui du ressort de compression, cette amplification s'exerçant avec des taux variables en fonction de l'écrasement de la suspension, de façon à raidir la suspension d'autant plus qu'elle est plus écrasée, ce qui diminue les risques de talonnement.

Ces dispositifs d'amplification de course à taux variable selon l'écrasement de la suspension compliquent par contre considérablement le couplage des suspensions avant et arrière d'un véhicule et modifient de façon sensible l'interaction entre le ressort de suspension et l'amortisseur. Il serait souhaitable, à la fois pour régler plus aisément les caractéristiques d'amortissement et pour pouvoir coupler les suspensions avant et arrière d'un motocycle afin de réduire le tangage et la plongée ou «salut» du train avant au cours du freinage, de disposer d'une suspension avant et/ou arrière où la course d'écrasement du ressort de suspension en forme de ressort hélicoïdal de compression est amplifiée mais de façon sensiblement proportionnelle à l'écrasement de la suspension ou tout au moins à la rotation du bras support de roue.

L'un des buts de la présente invention est précisément de proposer une suspension avant ou arrière de motocylce dont les déplacements de l'extrémité d'appui du ressort de compression sont amplifiés de façon sensiblement linéaire par rapport au déplacement d'un pivot central de levier, ce qui facilite le couplage avant-arrière éventuel et le contrôle de l'interaction suspension-amortissement.

A cet effet, une extrémité d'appui du ressort de compression est articulée à l'extrémité libre du grand bras d'un levier à deux bras et à trois points de pivotement, dont l'extrémité libre du petit bras est reliée à l'extrémité d'une biellette de réaction, les autres extrémités de la biellette et du ressort étant respectivement soit articulées à des points fixes du châssis du véhicule tandis que le pivot central du levier à deux bras est articulé sur un prolongement de support rotatif, dans le cas d'une suspension avant de motocycle, soit articulées sur des prolongements du bras support rotatif tandis que le pivot central du levier à deux bras est articulé à un point fixe du châssis, dans le cas d'une suspension arrière de motocycle, de manière que le déplacement relatif de la biellette par rapport au pivot central au cours du débattement de la suspension soit inversé par le levier à deux bras et amplifié de façon sensiblement linéaire pour produire des variations de longueur importantes du ressort de compression à partir de faibles déplacements de la biellette par rapport au pivot central du levier. Les ressorts de suspension de la suspension avant et de la suspension arrière sont des ressorts hélicoïdaux montés sur des supports de guidage orientés dans le même sens.

Lorsque le dispositif de suspension selon l'invention s'applique à la roue arrière d'un motocycle, le ressort de compression est, de préférence, guidé sur un axe et comprimé entre deux supports d'extrémité dont l'un est articulé sur un prolongement du bras support du côté de la roue arrière par rapport à l'articulation de la biellette sur le bras support et l'autre est articulé sur l'extrémité du grand bras de levier et en position moyenne du débattement de la suspension, l'axe de guidage du ressort de compression forme un angle inférieur à 45° par rapport à l'axe médian du bras de suspension et est sensiblement parallèle à l'axe médian de la biellette.

Lorsque le dispositif de suspension est appliqué à la roue avant d'un motocycle, le ressort de suspension peut être guidé sur un axe et comprimé entre deux supports d'extrémité dont l'un est articulé sur le châssis du véhicule en arrière de l'articulation du bras support sur ce châssis et l'autre est articulé sur l'extrémité du grand bras de levier et en position moyenne du débattement de la suspension, l'axe de guidage du ressort de compression forme un angle inférieur à 45° par rapport à l'axe médian du bras support et est sensiblement parallèle à l'axe médian de la biellette.

Les dispositions qui précèdent font que l'axe de guidage du ressort de suspension de la roue avant et l'axe de guidage du ressort de suspension de la roue arrière peuvent être sensiblement parallèle, ce qui permet d'avoir des caractéristiques de suspension parallèles sur les suspensions avant et arrière et facilite leur couplage.

En variante, lorsque le dispositif de suspension est appliqué à la roue avant d'un motocycle reliée par deux bras d'articulation sensiblement parallèles au châssis du véhicule, le ressort de compression, le levier à deux bras et la biellette sont disposés au-dessus des deux bras d'articulation et le pivot central du levier à deux bras est relié à un prolongement de l'un des bras d'articulation, de manière que ce pivot central subisse une rotation significative et selon une direction voisine de l'horizontale au cours du débattement de la suspension par rotation des deux bras d'articulation.

Le système de couplage entre la suspension de la roue avant d'un motocycle et la suspension de la roue arrière de ce motocycle et présentant des dispositifs de suspension du type qui vient d'être décrit, comporte de chaque côté avant et arrière du véhicule une bielle ou équivalent dont l'une des extrémités est articulée à l'extrémité d'appui du ressort de suspension tandis que son autre extrémité est articulée à un bras de sortie d'un organe de couplage rotatif élastique entre les suspensions avant et arrière du véhicule, les deux bielles étant couplées chacune à l'un des deux bras opposés de l'organe de couplage pour se déplacer simultanément dans le même sens, de telle sorte que, par rapport à une situation préréglée de répartition des écrasements de la suspension avant et de la suspension arrière du véhicule, une surcharge sur la roue avant par rapport à la situation préréglée soit supportée partiellement, via l'organe de couplage rotatif, par la roue arrière et vice versa pour une surcharge sur la roue arrière ou pour une diminution de la charge supportée par l'une des suspensions. L'organe de couplage rotatif élastique est en général une barre de torsion montée rotative transversalement au sens de marche du véhicule, sur au moins un palier porté par le véhicule et dont chaque extrémité est relié au moins en rotation à l'un des bras de sortie articulé à la bielle correspondante qui est elle-même articulée à l'appui du ressort de suspension respectif avant ou arrière.

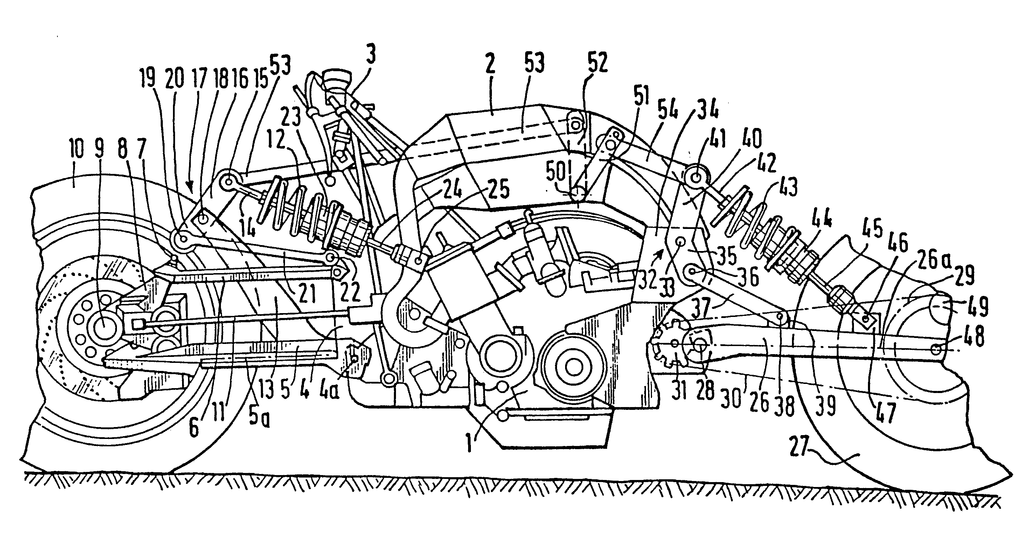

D'autres buts, avantages et caractéristiques de l'invention apparaîtront à la lecture de la description de deux modes de réalisation préférés de l'invention, faite à titre non limitatif et en regard du dessin annexé où la figure représente, en vue de côté avec arrachements et en élévation, un motocycle équipé de deux modes de réalisation du dispositif de suspension selon l'invention et d'un couplage avant-arrière entre ces deux modes de réalisation.

Sur la figure, qui représente les parties princpales d'un motocycle, on reconnaît un ensemble motopropulseur 1 surmonté par des conduits d'échappement 2 et un guidon 3 et prolongé par un châssis avant 4 sur lequel est articulé en 4a le bras principal 5 de la suspension avant. Un bras supérieur 6 sensiblement parallèle au bras 5 et articulé également au châssis avant 4 coopère avec le bras principal 5 pour supporter sur des pivots (seul le pivot supérieur 7 est représenté) un axe de pivotement incliné d'un support de pivot 8 de la fusée 9 de la roue avant 10 dont l'orientation est contrôlée par une bielle 11 reliée par des cardans au guidon 3.

La liaison entre le bras principal 5 est un ressort de suspension avant 12 est réalisée selon l'invention à l'aide d'un prolongement rigide 13 du levier principal 5. L'extrémité d'appui 14 du ressort de compression constituant le ressort de suspension avant 12 est articulée en 15 à l'extrémité libre du grand bras 16 d'un levier 17 à deux bras et à trois axes de pivotement 15 (déjà mentionné), 18 et 19. Le petit bras 20 du levier 17 est articulé en 19 à l'extrémité d'une biellette de réaction 21 dont l'autre extrémité est articulée en 22 sur le châssis avant 4 à proximité de l'articulation du bras supérieur 6.

Le ressort de suspension 12 est guidé sur un corps d'amortisseur 23 traversé par une tige qui forme l'extrémité d'appui 14. Le corps 23 se prolonge du côté opposé à l'extrémité 14 par une tige de liaison 24 articulée en 25 sur le châssis avant 4.

Le fonctionnement de la suspension avant du motocycle se déduit aisément de la figure. Lorsqu'une surcharge est appliquée sur la roue avant 10, le bras principal 5 et le bras supérieur 6 tournent dans le sens des aiguilles d'une montre autour de leurs axes d'articulation sur le châssis avant 4 en entraînant également en rotation le prolongement rigide 13 et l'axe de pivotement central 18 qui lui est relié et qui tourne ainsi autour de l'axe d'articulation 4a du bras principal 5.

Au cours du déplacement en rotation de l'axe de pivotement central 18, la biellette 21 impose à l'axe de pivotement inférieur 19 du petit bras 20 une rotation autour de l'articulation 22, qui se traduit par une rotation du levier 17 autour de son axe de pivotement central 18. L'effet de réaction de la biellette 21 provoque ainsi une rotation du levier à deux bras 17 dans le sens des aiguilles d'une montre et une compression supplémentaire du ressort 12 qui rééquilibre la surcharge appliquée à la roue avant 10.

Si l'on se reporte maintenant à la partie arrière du motocycle, on voit que le bras de support 26 de la roue arrière 27 est articulé en 28 sur un prolongement du bloc moteur transmission 1. La roue arrière motrice 27 est munie d'une couronne de chaîne 29 entrainée en rotation par le moteur à l'aide d'une chaîne 30 et d'un pignon 31 du bloc 1.

Pour réaliser ici le dispositif de suspension de roue arrière selon l'invention, un levier à deux bras 32 est articulé à l'aide d'un pivot central 33 sur un châssis arrière 34 solidaire du bloc motopropulseur 1 et le petit bras 35 de ce levier est articulé en 36 à l'extrémité d'une biellette 37 dont l'autre extrémité est articulée en 38 sur un prolongement 39 du bras support 26 de la roue arrière 27. Le grand bras 40 du levier 32 est articulé en 41 à l'extrémité d'appui 42 du ressort de compression 43 de la suspension arrière monté comme le ressort avant 12 sur un corps d'amortisseur 44 dont l'extrémité d'appui 45 en forme de tige est articulée en 46 sur un prolongement 47 du bras 26, plus proche de la roue arrière 27 que le prolongement 39 sur lequel est articulée la biellette 37. Le bras 26 porte l'axe 48 de la roue arrière ainsi que l'étrier de frein 49 et supporte ainsi tous les couples de traction et de freinage appliqués à la roue arrière 27.

Le fonctionnement du dispositif de suspension de la roue arrière présente des analogies de fonctionnement avec celui de la roue avant et provoque un déplacement de même sens de l'appui 42 du ressort. Lorsqu'une surcharge est appliquée à la roue arrière 27, le bras de support 26 tourne dans le sens inverse des aiguilles d'une montre, ce qui repousse vers la gauche de la figure l'articulation 46 de l'extrémité d'appui 45 du ressort 43 et l'articulation 38 de la biellette 37. Le déplacement de la biellette vers la gauche entraîne vers la gauche l'articulation 36 du levier 32 qui tourne dans le sens des aiguilles d'une montre en amplifiant au niveau de l'articulation 41 le déplacement de l'extrémité d'appui 42 vers la droite. Le déplacement de la roue 27 vers le haut par rapport au châssis du motocycle et sous l'effet d'une surcharge, produit ainsi une compression supplémentaire du ressort de compression 43, ce qui équilibre la surcharge sur la roue 27.

On remarque que grâce à la disposition de l'invention, les ressorts de suspension avant 12 et arrière 43 sont des ressorts hélicoïdaux montés sur des extrémités d'appui respectives 14, 42 et 24, 45 formant support de guidage et orientées dans le même sens. Comme on le voit sur la figure, l'axe longitudinal des ressorts 12 et 43 forme un angle inférieur à 45° par rapport à l'axe médian 5a et 26a des bras de suspension respectifs 5 et 26. En vue d'obtenir des caractéristiques de suspension sensiblement identiques à l'avant et à l'arrière, en position moyenne de débattement de la suspension, les axes longitudinaux des ressorts de suspension 12 et 43 sont disposés de façon sensiblement parallèles l'un à l'autre.

Pour la réalisation de la suspension avant, le ressort de compression 12, le levier à deux bras 17 et la biellette 21 sont disposés au-dessus des deux bras de suspension 5 et 6 et la liaison de l'axe central de pivotement 18 au prolongement 13 solidaire du bras principal inférieur 5 est réalisée avec une forte inclinaison de ce prolongement 13, de manière que cet axe 18 subisse une rotation significative et selon une direction voisine de l'horizontale au cours du débattement de la suspension par rotation des deux bras de suspension 5 et 6. Le prolongement 13 peut être rendu solidaire du bras supérieur 6 et non pas du bras principal 5, à condition de prévoir autour du point de pivotement de ce bras 6 une rotation de l'axe qui satisfasse aux conditions qui viennent d'être énoncées.

Le couplage entre les suspensions avant et arrière du motocycle représenté sur la figure est réalisé de façon relativement aisée en utilisant les dispositifs de suspension qui viennent d'être décrits. On prévoit pour cela une barre de torsion 50 montée rotative dans deux paliers (non représentés) du châssis du véhicule transversalement à la direction longitudinale ou au sens de marche du motocycle, chaque extrémité de la barre de torsion étant reliée à un bras rotatif de sortie 51 et respectivement 52. Le bras rotatif 51 est relié par une bielle 54 à l'extrémité d'appui 42 du ressort de compression arrière 43, de préférence via l'articulation 41 tandis que le bras rotatif 52 (représenté en pointillés parce que caché par les conduits d'échappement 2) est relié par une bielle 53 à l'extrémité d'appui 14 du ressort de compression avant 12, de préférence via l'axe de pivotement 15 du grand bras de levier 16. On remarque que la bielle 54 est relativement courte tandis que la bielle longue 53 est disposée au-dessus du bloc motopropulseur 1.

Le fonctionnement du dispositif de couplage des suspensions avant et arrière va maintenant être décrit. Les suspensions avant et arrière sont représentées en position de charge normale avec le conducteur à bord du motocycle. On suppose que le conducteur déclenche un freinage brutal; la charge du véhicule se transfère alors partiellement sur la roue avant 10 du fait de la décélération qui suit le freinage et le ressort 12 tend à s'écraser encore plus, ce qui provoque le déplacement vers la droite de la figure de l'extrémité d'appui 14 et de l'axe d'articulation 15 et tend à faire tourner le bras de sortie 52 dans le sens des aiguilles d'une montre.

La barre de torsion 50 entraîne élastiquement le bras de levier opposé 51 en rotation dans le même sens, ce qui comprime le ressort 43 qui avait tendance à se délester du fait du transfert de charge sur l'avant. Sous l'effet de la réaction supplémentaire du ressort 43 de suspension arrière, la barre de torsion 50 se tord partiellement de telle sorte qu'une partie seulement de la surcharge de l'avant est transmise à l'arrière, ce qui empêche néanmoins le basculement, typiquement appelé «salut», du motocycle vers l'avant au cours du freinage, ou tout au moins le réduit considérablement.

Dans le cas inverse, par exemple à la réaccélération qui suit un freinage, la roue avant 10 est délestée d'une partie de sa charge et l'extrémité d'appui 14 se déplace vers la gauche de la figure avec l'axe d'articulation 15, ce qui tend à faire tourner le bras de levier 52 dans le sens inverse des aiguilles d'une montre. Le bras de levier 51 tourne dans le même sens et la bielle 54 entraîne ainsi l'extrémité d'appui 42 du ressort 43 vers la droite de la figure et déleste également la suspension arrière. Le délestage de l'avant est ainsi limité et le conducteur conserve une bonne adhérence de direction sur la roue avant au cours des reprises d'accélération brutales. On voit que le couplage selon l'invention entre les suspensions avant et arrière s'oppose efficacement au développement des dissymétries d'écrasement entre les suspensions avant et arrière, cette opposition pouvant même être efficace dans le cas où l'une des suspensions tendrait à s'affaisser accidentellement, par exemple à la suite de la rupture de l'un des ressorts de suspension 12 ou 43.

La barre de torsion 50, normalement montée rotative dans deux paliers non représentés du chassis, peut être fixée au chassis entre ces deux paliers pour constituer alors un ressort de suspension avant et/ou arrière et non plus un élément de couplage des suspensions avant et arrière. Le ressort de suspension constitué par cette barre de torsion 50 peut alors être utilisé seul comme ressort de suspension à la place des ressorts avant 12 et/ou arrière 43, ou bien en combinaison avec ces ressorts. Une telle suspension à barre de torsion présente l'avantage d'être très compacte et aisement réglable en précontrainte.

Le couplage qui a été proposé sur la figure à l'aide de bielles, de leviers et d'une barre de torsion peut être réalisé, le cas échéant, par d'autres moyens tels que des systèmes à câbles et gaines. De même, on comprend que les ressorts de suspension hélicoïdaux 12 et 43 peuvent présenter des orientations différentes de l'orientation sensiblement parallèle représentée, pourvu que leur inlincaison varie peu au cours du débattement de la suspension. En modifiant la longueur des bielles 52 et/ou 54 à l'aide par exemple d'un raccord vissé, lorsque les suspensions avant et arrière sont en charge, on peut modifier le point d'équilibre entre les charges des suspensions avant et arrière et corriger ainsi l'assiette du véhicule en charge tout en assurant un bon couplage entre l'avant et l'arrière.

## Revendications

1. Dispositif de suspension d'un bras support rotatif d'une roue de véhicule, en particulier d'une roue de motocycle, le dit bras support étant susceptible de se débattre par rotation autour d'un axe de liaison solidaire du châssis ou de la caisse du véhicule pour coopérer avec un ressort de compression, caractérisé en ce qu'une extrémité d'appui (14, 42) du ressort de compression (12, 43) est articulée à l'extrémité libre du grand bras (16, 40) d'un levier (17, 32) à deux bras et à trois points de pivotement (15, 18, 19 - 33, 36, 41) dont l'extrémité libre (19, 36) du petit bras (20, 35) est reliée à l'extrémité d'une biellette (21, 37), les autres extrémités respectivement de la biellette (21, 37) et du ressort (12, 43) étant soit articulées à des points fixes (22, 25) du châssis (4) du véhicule tandis que le pivot central (18) du levier à deux bras (17) est articulé sur un prolongement (13) du bras de support rotatif (5), dans le cas d'une suspension avant de motocycle, soit articulées sur des prolongements (39, 47) du bras support rotatif (26) tandis que le pivot central (33) du levier à deux bras (32) est articulé à un point fixe du châssis, dans le cas d'une suspension arrière de motocycle, de manièrr que le déplacement relatif de la biellette (21, 37) par rapport au pivot central (18, 33) au cours du débattement de la suspension soit inversé de sens par le levier à deux bras (17, 32) et amplifié de façon sensiblement linéaire pour produire des variations de longueur importantes du ressort de compression (12, 43) à partir de faibles déplacements de la biellette (21, 37) par rapport au pivot central (18, 33) du levier (17, 32).

2. Dispositif de suspension selon la revendication 1, caractérisé en ce que les ressorts de suspension avant (12) et arrière (43) sont des ressorts hélicoïdaux montés sur des supports de guidage (23, 44) orientés dans le même sens.

3. Dispositif de suspension selon la revendication 1 ou 2 appliqué à la roue arrière d'un motocycle, caractérisé en ce que le ressort de compression (43) est guidé sur un axe et comprimé entre deux supports d'extrémités (42, 45) dont l'un (45) est articulé sur un prolongement (47) du bras support (26) du côté de la roue arrière (27) par rapport à l'articulation de la biellette sur le bras support (26) et l'autre (42), est articulé sur l'extrémité du grand bras de levier (40) et en ce que, en position moyenne du débattement de la suspension, l'axe de guidage du ressort de compression (43) forme un angle inférieur à 45° par rapport à l'axe médian (26a) du bras de suspension (26) et est sensiblement parallèle à l'axe médian de la biellette (37).

4. Dispositif de suspension selon l'une des revendications 1 à 3 appliqué à la roue avant d'un motocycle, caractérisé en ce que le ressort de suspension (12) est guidé sur un axe et comprimé entre deux supports d'extrémités (14, 24) dont l'un (24) est articulé sur le châssis (4) du véhicule en arrière de l'articulation du bras support (5) sur ce châssis, et l'autre (14) est articulé sur l'extrémité du grand bras de levier (16) et en ce qu'en position moyenne du débattement de la suspension, l'axe de guidage du ressort de compression (12) forme un angle inférieur à 45° par rapport à l'axe médian (5a) du bras support (5) et est sensiblement parallèle à l'axe médian de la biellette (21).

5. Dispositif de suspension selon l'une des revendications 3 ou 4, caractérisé en ce que l'axe de guidage du ressort de suspension (12) de la roue avant (10) et l'axe de guidage du ressort de suspension (43) de la roue arrière (27) sont sensiblement parallèles.

6. Dispositif de suspension selon l'une des revendications 1 à 5, appliqué à la roue avant d'un motocycle, reliée par deux bras d'articulation sensiblement parallèles au châssis du véhicule, caractérisé en ce que le ressort de compression (12), le levier à deux bras (17) et la biellette (21) sont disposés au-dessus des deux bras d'articulation (5, 6) et en ce que le pivot central (18) du levier à deux bras (17) est relié à un prolongement (13) de l'un (5) des bras d'articulation, de manière que ce pivot central (18) subisse une rotation significative et selon une direction voisine de l'horizontale au cours du débattement de la suspension par rotation des deux bras d'articulation (5, 6).

7. Système de couplage entre la suspension de la roue avant d'un motocycle et la suspension de la roue arrière de ce motocycle selon l'une des revendications 1 à 6, caractérisé en ce qu'il comporte de chaque côté avant et arrière du véhicule une bielle ou équivalent (54, 53) dont l'une des extrémités est articulée à l'extrémité d'appui (14, 42) du ressort de suspension (12, 43), tandis que son autre extrémité est articulée à un bras de sortie (51, 52) d'un organe de couplage rotatif élastique (50) entre les suspensions avant et arrière du véhicule, les deux bielles (54, 53) étant couplées chacune à l'un des deux bras opposés (51, 52) de l'organe de couplage pour se déplacer simultanément dans le même sens, de telle sorte que, par rapport à une situation préréglée de répartition des écrasements de la suspension avant et de la suspension arrière du véhicule, une surcharge sur la roue avant (10) par rapport à la situation préréglée soit supportée partiellement, via l'organe de couplage rotatif (50), par la roue arrière (27) et vice versa pour une surcharge sur la roue arrière (27) ou pour une diminution de la charge supportée par l'une des suspensions.

8. Système de couplage selon la revendication 7, caractérisé en ce que l'organe de couplage rotatif élastique est une barre de torsion (50) montée rotative transversalement au sens de marche de véhicule sur au moins un palier porté par le véhicule et dont chaque extrémité est reliée au moins en rotation à l'un des bras de sortie (51, 52) articulé à la bielle correspondante (54, 53) qui est elle-même articulée à l'appui (42, 14) du ressort de suspension respectif (43, 12) arrière ou avant.

## Patentansprüche

1. Aufhängungsvorrichtung für einen drehbaren Haltearm eines Fahrzeugrads, insbesondere eines Motorrad-Rads, bei der der Haltearm um eine mit dem Fahrzeugzeugrahmen bzw. Fahrzeuggestell fest verbundene Verbindungsachse zwecks Zusammenwirkung mit einer Druckfeder verschwenkbar ist, dadurch gekennzeichnet, dass ein Abstützende (14, 42) der Druckfeder (12, 43) an das freie Ende des langen Hebelarms (16, 40) eines zweiarmigen, um drei Schwenkpunkte (15, 18, 19 - 33, 36, 41) schwenkbaren Hebels (17, 32) angelenkt ist, während der kurze Hebelarm (20, 35) mit seinem freien Ende (19, 36) mit dem Ende eines Schwingarms (21, 37) verbunden ist und die anderen Enden des Schwingarms (21, 37) bzw, der Feder (12, 43) an feste Punkte (22, 25) des Fahrzeugrahmens (4) angelenkt sind und die Mittelschwenkachse (18) des zweiarmigen Hebels (17) entweder (bei einer Motorrad-Vorderradaufhängung) an eine Verlängerung (13) des drehbaren Haltearms (5) oder (bei einer Motorrad-Hinterradaufhängung) an Verlängerungen (39, 47) des drehbaren Haltearms (26) angelenkt sind und wobei Mittelschwenkachse (33) des zweiarmigen Hebels (32) bei einer Motorrad-Hinterradaufhängung an einen festen Punkt des Fahrzeugrahmes angelenkt ist, so dass die Richtung der Bewegung des Schwingarms (21, 37) in bezug auf die Mittelachse (18, 33) während des Ausschlagens der Aufhängung durch den zweiarmigen Hebel (17, 32) umgekehrt und der Ausschlaghub wesentlich linear vergrössert wird, um erhebliche Änderungen der Länge der Druckfeder (12, 43) bei geringfügigen Bewegungen des Schwingarms (21, 37) in bezug auf die Mittelschwenkachse (18, 33) des Hebels (17, 37) zu bewirken.

2. Aufhängungsvorrichtung nach Anspruch 1, dadurch gekennzeichnet, dass die vorderen und hinteren Aufhängungsfedern (12 bzw. 43) durch gleichsinnig ausgerichtete Führungshaltern (23, 44) angeordnete Schraubenfedern gebildet sind.

3. Aufhängungsvorrichtung nach Anspruch 1 oder 2, zur Aufhängung des Hinterrads eines Motorrads, dadurch gekennzeichnet, dass die Druckfeder (43) auf einer Achse geführt und zwischen zwei Endstützen (42, 45) eingespannt ist, deren eine (45) in bezug auf die Anlenkung des Schwingarms an den Haltearm (26) auf der Seite des Hinterrads (27) an eine Verlängerung (47) des Haltearms (26) angelenkt ist, während die andere Endstütze (42) am Ende des langen Hebelarms (40) angelenkt ist, und dass bei mittlerer Ausschlaglage der Aufhängung die Führungsachse der Druckfeder (43) einen Winkel von weniger als 45° mit der Mittelachse (26a) des Aufhängungsarms (26) bildet und wesentlich parallel zur Mittelachse des Schwingarms (37) ist.

4. Aufhängungsvorrichtung nach einem der Ansprüche 1 bis 3, für das Vorderrad eines Motorrads, dadurch gekennzeichnet, dass die Aufhängungsfeder (12) auf einer Achse geführt und zwischen zwei Endstützen (14, 24) eingespannt ist, deren eine (24) hinter der Anlenkung des Haltearms (5) an den Fahrzeugrahmen an letzteren angelenkt ist, während die andere Endstütze (14) an das Ende des langen Hebelarms (16) angelenkt ist, und dass bei mittlerer Ausschlaglage der Aufhängung die Führungsachse der Druckfeder (12) mit der Mittelachse (5a) des Haltearms (5) einen Winkel von weniger als 45° bildet und zur Mittelachse des Schwingarms (21) wesentlich parallel ist.

5. Aufhängungsvorrichtung nach Anspruch 3 oder 4, dadurch gekennzeichnet, dass die Führungsachse der Aufhängungsfeder (12) des Vorderrads (10) und die Führungsachse der Aufhängungsfeder (43) des Hinterrads (27) wesentlich parallel zu einander sind.

6. Aufhängungsvorrichtung nach einem der Ansprüche 1 bis 5, die zur Aufhängung eines Motorrad-Vorderrads, vermittels zweier wesentlich paralleler Gelenkarme mit dem Fahrzeugrahmen verbunden ist, dadurch gekennzeichnet, dass die Druckfeder (12), der zweiarmige Hebel (17) und der Schwingarm (21) oberhalb der beiden Gelenkarme (5, 6) angeordnet sind, und dass die mittlere Schwenkachse (18) des zweiarmigen Hebels (17) mit einer Verlängerung (13) eines (5) der beiden Gelenkarme verbunden ist, derart, dass diese mittlere Schwenkachse (18) während des Ausschlagens der Aufhängung durch Drehung der beiden Gelenkarme (5, 6) spürbar in wesentlich horizontaler Richtung gedreht wird.

7. Kupplungssystem zwischen der Aufhängung des Vorderrads eines Motorrads und des Hinterrads desselben, gemäss einem der Ansprüche 1 bis 6, dadurch gekennzeichnet, dass es an der Vorderseite und an der Rückseite des Fahrzeugs einen Schwingarm (54, 53) od. dgl. umfasst, dessen eines Ende an das Abstützende (14, 42) der Aufhängungsfeder (12, 43) angelenkt ist, während das andere Schwingarmende an einen Ausgangsarm (51, 52) eines drehbaren, elastischen Kupplungsorgans (50) zwischen der Vorderradaufhängung und der Hinterradaufhängung des Fahrzeugs angelenkt ist, wobei die beiden Schwingarme (54, 53) ja an einen der beiden einander gegenüberliegenden Arme (51, 52) des Kupplungsorgans angekuppelt sind, um sich gleichzeitig in gleicher Richtung zu bewegen, derart, dass in Anbetracht vorbestimmter Verhältnisse hinsichtlich der Verteilung des Niederdrückens der vorderen und der hinteren Fahrzeugaufhängung eine in bezug auf die vorbestimmten Verhältnisse auftretende Überlastung des Vorderrads (10) teilweise unter Mitwirkung des drehbaren Kupplungsorgans (50) teilweise vom Hinterrad (27) aufgenommen wird, und umgekehrt desgleichen bei Auftreten einer Überlastung des Hinterrads (27) bzw. bei einer Verminderung der von einer der Aufhängungen aufgenommen Belastungen.

8. Kupplungssystem nach Anspruch 7, dadurch gekennzeichnet, dass das drehbare, elastische Kupplungsorgan aus einer Drehstabfeder (50) besteht, die quer zur Fahrtrichtung des Fahrzeugs in wenigstens einem vom Fahrzeug getragenen Lager drehbar gelagert ist und deren jedes Ende wenigstens drehbar mit einem der Ausgangsarme (51, 52) verbunden ist, der an den entsprechenden Schwingarm (54, 53) angelenkt ist, welch letzterer an die Endstütze (42, 14) der betreffenden Vorderrad- bzw. Hinterradaufhängungsfeder (43, 12) angelenkt ist.

**Claims**

1. Suspension device for a rotative support arm of a vehicle wheel, in particular for a motocycle wheel, said support arm being adapted to oscillate reciprocally about a connecting axis integral with the chassis or body of the vehicle while cooperating with a compression spring, characterized in that one bearing end (14, 42) of the compression spring (12, 43) is hinged to the free end of the large arm (16, 40) of a lever (17, 32) with two arms and three hinging points (15, 18, 19-33, 36, 41), the free end (19, 36) of the small lever arm (20, 35) being connected to the end of a rod (21, 43), the respective other ends of the rod (21, 37) and of the spring (12, 43) being hinged either at fixed points (22, 25) of the vehicle chassis (4), while the central pivot (18) of the lever (17) with two arms is hinged on an extension (13) of the rotative support arm (5) (in the case of a motorcycle front suspension), or to extensions (39, 47) of said rotative support arm (26), whereas the central pivot (33) of the lever (32) with two arms is hinged at a fixed point to the vehicle chassis (in the case of a motorcycle rear suspension), in such a manner that during the oscillating movement of the suspension the displacement of the rod (21, 37) with respect to the central pivot (18, 33) is inverted by the lever (17, 32) with two arms and is substantially linearily amplified, so as to produce considerable variations in length of said compression spring (12, 43) for small displacements of the rod (21, 37) with respect to the central pivot (18, 33) of the lever (17, 32).

2. Suspension device according to claim 1, characterized in that the the front and rear suspension springs (12, 43) are helical springs mounted on guiding supports (23, 44) oriented in the same direction.

3. Suspension device according to claim 1 or 2, applied to the rear wheel of a motorcycle, characterized in that the compression spring (43) is guided on an an axis and compressed between two end supports (42, 45) one of which (45) is hinged on an extension (47) of the support arm (26) on the side of the rear wheel (27), with respect to the hinge between the rod and the support arm (26), the other end support (42) being hinged on the end of the long lever arm (40), and in that for an average position of the suspension the guiding axis of the compression spring (43) forms an angle smaller than 45° with respect to the median axis (26a) of the suspension arm (26) and is substantially parallel to the median axis of the rod (37).

4. Suspension device according to any of claims 1 to 3, applied to the front wheel of a motorcycle, characterized in that the suspension spring (12) is guided on an axis and compressed between two end supports (14, 24) one of which (24) is hinged on the chassis of the vehicle (4) to the rear of the hinge of the support arm (5) and the vehicle chassis (4) while the other one of said end supports (14) is hinged on the end of said large lever arm (16), and in that for the mean position of the suspension the guiding axis of the compression spring (12) forms an angle smaller than 45° with respect to the median axis (5a) of the support arm (5) and is substantially parallel to the median axis of the rod.

5. Suspension device according to any of claims 3 and 4, characterized in that the guiding axis of the suspension spring (12) of the front wheel (10) and the guiding axis of the suspension spring (43) of the rear wheel (27) are substantially parallel.

6. Suspension device according to any of claims 1 to 5, applied to the front wheel of a motorcycle which is connected to the frame of the vehicle by two hinging arms substantially parallel, characterized in that the compression spring (12), the lever (17) with two arms and the rod (21) are disposed above the two hinging arms (5, 6), and in that the central pivot (18) of said lever (17) with two arms is connected to an extension (13) of one (5) of said hinging arms, in such a manner that the central pivot (18) effects a significant rotation in a direction close to the horizontal during reciprocated displacement of the suspension by rotation of said two hinging arms (5, 6).

7. Coupling system between the suspension of the wheel of a motorcycle and the suspension of the rear wheel of the motorcycle according to any of claims 1 to 6, characterized in that it comprises on each front and rear side of the vehicle a rod or similar element (54, 53) one end of which is hinged on the bearing end (14, 42) of the suspension spring (12, 43), while the other end is hinged to a final arm (51, 52) of a resilient rotary coupling member (50) between the front and rear suspensions of the vehicle, the two rods (54, 53) each being coupled to one of the two opposing arms of the coupling member in order to be displaced simultaneously in the same direction, so that, with respect to a pre-set situation of distribution of the depressions of said front and rear suspensions of the vehicle, any overload applied onto the front wheel (10) with respect to said pre-set situation is partially supported, through the intermediary of said rotary coupling member (50), by the rear wheel (27), and vice versa as regards an overload acting on the rear wheel (27), or a reduction in the load applied to any one of said suspensions.

8. Coupling system according to claim 7, characterized in that the resilient rotary coupling member is constituted by a torsion bar (50) rotatively mounted transversally to the running direction of the vehicle on at least one bearing borne by the vehicle, each end of said bearing being at least rotatively connected to one of the final arms (51, 52) hinged to the corresponding rod (54, 53) which, in turn, is hinged to the bearing end (42, 14) of the respective rear or front suspension spring (43, 12).

EP 0 210 879 B1